Europäisches Patentamt

European Patent Office

Office européen des brevets

(19)

(11) Publication number: **0 206 655**
**A2**

# (12) EUROPEAN PATENT APPLICATION

(21) Application number: 86304496.2

(22) Date of filing: 12.06.86

(51) Int. Cl.⁴: **G 06 F 9/30**

(30) Priority: 28.06.85 US 750376

(43) Date of publication of application: 30.12.86
Bulletin 86/52

(84) Designated Contracting States: CH DE FR GB IT LI NL SE

(71) Applicant: Hewlett-Packard Company, P.O. Box 10301,
Palo Alto California 94303-0890 (US)

(72) Inventor: Worley, William S., 19316 Falmouth Court,
Saratoga California 95120 (US)
Inventor: Mahon, Michael James, 1975 Adele Place, San
Jose California 95125 (US)

(74) Representative: Colgan, Stephen James et al,
CARPMAELS & RANSFORD 43 Bloomsbury Square,
London WC1A 2RA. (GB)

(54) Method and apparatus for embedding data in an instruction stream.

(57) By the use of a LOAD IMMEDIATE LEFT instruction and a subsequent ADD IMMEDIATE instruction a data word having the same length as an instruction is loaded to a target register without the need for special fault handling hardware or software. The upper portion of the data word is embedded in the first instruction and the lower portion is embedded in the second instruction; the portions are stored in the target register independently and are combined to form the desired data word. In an alternate embodiment, the upper portion is combined with the contents of a source register, the combination is stored in a reserved register and lower order bits may be supplied by a subsequent memory reference instruction to create a 32 bit address displacement which, optionally, may be stored in the reserved register for later use.

AND APPARATUS
METHOD/FOR EMBEDDING DATA IN AN INSTRUCTION STREAM

## Background and Summary of the Invention

In the use of many high speed computer processors it is often advantageous to embed data in the stream of instructions which are used by the processor. For example, a 32 bit processor may have 32 bit data paths and registers and it may be desirable to embed data in the 32 bit instructions which are directed to the processor. Obviously, it is not possible to embed directly an entire 32 bit word of data into an instruction which is itself only 32 bits long.

It is known in the prior art to use a LONG IMMEDIATE operand mode to embed a data word in the instruction stream indirectly. In such a prior art method a preceding 32 bit instruction directs the processor to treat the next 32 bits in the instruction stream as a word of data rather than as an instruction. Although this prior art method does allow the data to be embedded in the instruction stream, it also complicates the design of the processor's control unit and fault handling software. This complex additional hardware and software is necessary because if a page fault or interrupt occurs between the execution of the preceding instruction and the loading of the following data word, the processor must remember that the following word is data rather than an instruction.

In accordance with the illustrated preferred embodiment

1

of the present invention, data may be embedded within a pair of instructions without necessitating the design of special fault handling hardware or software. An initial LOAD IMMEDIATE LEFT instruction contains an operating code (opcode), a target register address and 21 bits of data (immediate value). This instruction pads the 21 bit immediate value on the right with 11 zeroes and then loads the resulting 32 bit word into the target register. A later ADD IMMEDIATE instruction contains an opcode, the target register address and an 11 bit immediate value. This later instruction sums the 11 bit immediate value with the lower order bits of the target register so that the target register then contains the entire 32 bit data word. Since each instruction is independently completely executed, all page faults and interrupts are normal and no special hardware or software is required.

In an alternate preferred embodiment of the present invention an ADD IMMEDIATE LEFT instruction sums the contents of a source register with a 21 bit left adjusted immediate value and then stores the result in a reserved register. The instruction includes an opcode, the source register address and the 21-bit immediate value. The instruction pads the immediate value on the right with zeroes and then sums the resulting 32 bit word with the contents of the source register. This sum is stored in the reserved register and may be used as an address displacement by a subsequent memory reference instruction, e.g., LOAD or STORE. An 11 bit immediate value contained in the memory reference instruction may then be added to the contents of the reserved register to create a full 32 bit displacement relative to a base address contained in the source register of the ADD IMMEDIATE LEFT instruction.

## Brief Description of the Drawings

Figure 1 shows a generalized processor which may be used in accordance with the preferred and alternate preferred embodiments of the present invention.

Figure 2A shows bit assignments within the 32 bit LOAD IMMEDIATE LEFT instruction.

Figure 2B shows bit assignments within the 32 bit ADD IMMEDIATE instruction.

Figures 3A-B are a flow chart of the steps performed during the construction and the execution of the LOAD IMMEDIATE LEFT and ADD IMMEDIATE instructions in accordance with the preferred embodiment of the present invention.

Figure 4A shows the contents of the target register after loading of the padded immediate value by execution of the LOAD IMMEDIATE LEFT instruction.

Figure 4B shows the contents of the target register after execution of the ADD IMMEDIATE instruction.

Figure 5 shows bit assignments within the 32 bit ADD IMMEDIATE LEFT instruction.

Figures 6A-B are a flow chart of the steps performed during the construction and the execution of the ADD IMMEDIATE LEFT instruction in accordance with the alternate preferred embodiment of the present invention.

Figure 7A shows the result of padding the immediate value.

Figure 7B shows the results of execution of the ADD IMMEDIATE LEFT instruction.

Figures 8A-8B show bit assignments within two 32 bit memory reference instructions, LOAD and STORE.

### Detailed Description of the Preferred Embodiment

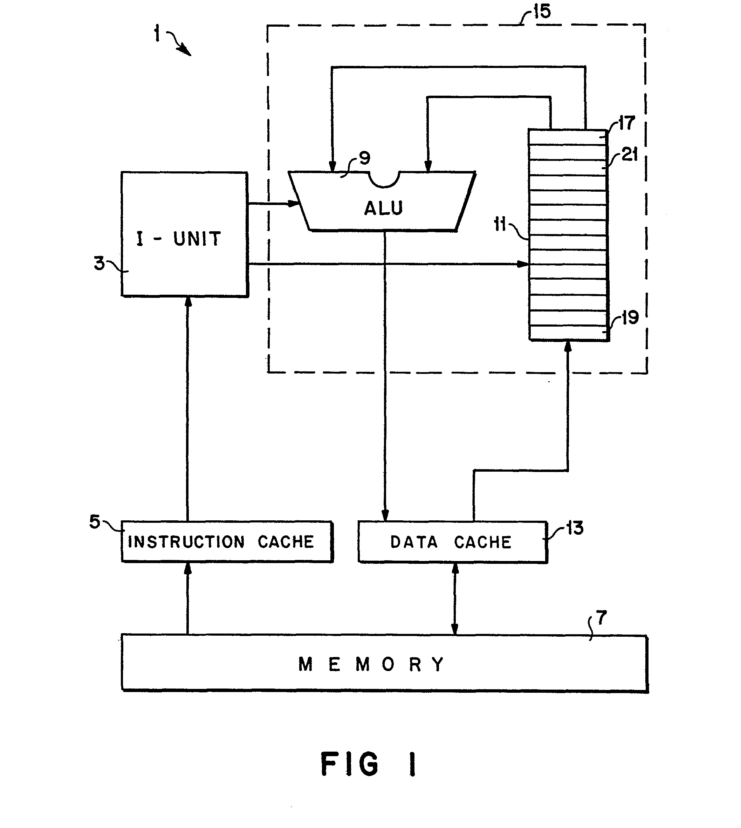

Figure 1 shows a typical processor 1 which may be used in accordance with the preferred embodiment and the alternate preferred embodiment of the present invention. The processor 1 includes an I-unit (control unit) 3 which receives instructions from a memory 7 via an instruction cache 5. The I-unit 3 controls an arithmetic logic unit (ALU) 9 and a register bank 11. The ALU and the register bank 11 make up an E-unit 15 and receive data from the memory 7 via a data cache 13. The register bank 11 includes various individual registers including general registers 17, 21 and a reserved register 19.

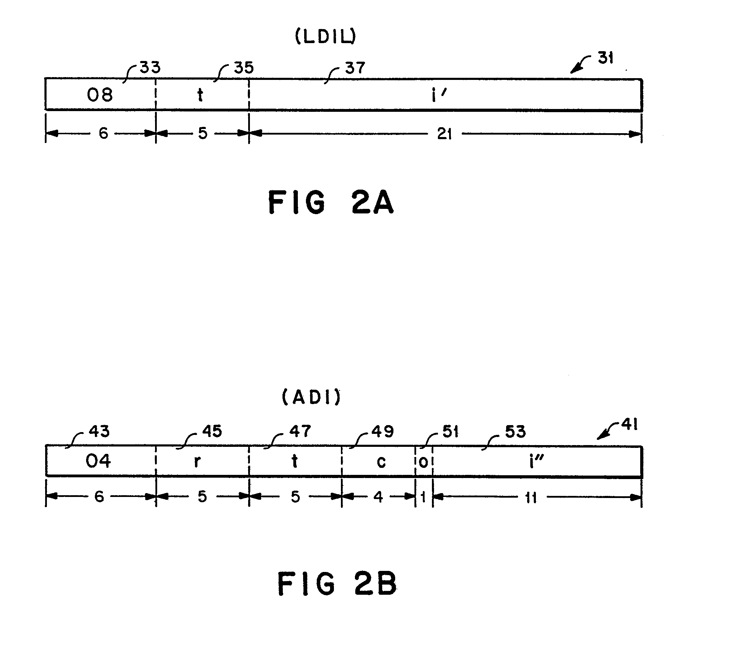

Figure 2A depicts bit assignments within the 32 bit LOAD IMMEDIATE LEFT (LDIL) instruction 31. The upper 6 bits make up the opcode field 33 containing the opcode which identifies the instruction. The target field 35 contains the 5 bit address of a target register 17 shown as a general register in Figure 1. The lower 21 bits of the LDIL

4

instruction make up the immediate value field 37 containing the immediate value i' which is the upper 21 bits of the desired 32 bit data word.

Figure 2B depicts bit assignments within the 32 bit ADD IMMEDIATE (ADI) instruction 41. The upper 6 bits make up the opcode field 43 containing the opcode which identifies the instruction. Both the source field 45 and the target field 47 contain the 5 bit address of the general register 17 specified as the target register in the LDIL instruction 31 since the contents of target register 17 are summed with i" and the sum is then stored back in target register 17. By changing address t in target field 47, the sum could be stored in a different target register if desired. A condition field 49 may be used to indicate conditions in which the instruction succeeding the ADI instruction is to be skipped. A one bit extension field 51 may be used to extend the opcode. The lower 11 bits of the ADI instruction make up the immediate value field 53 containing the immediate value i" which is the lower 11 bits of the desired 32 bit data word.

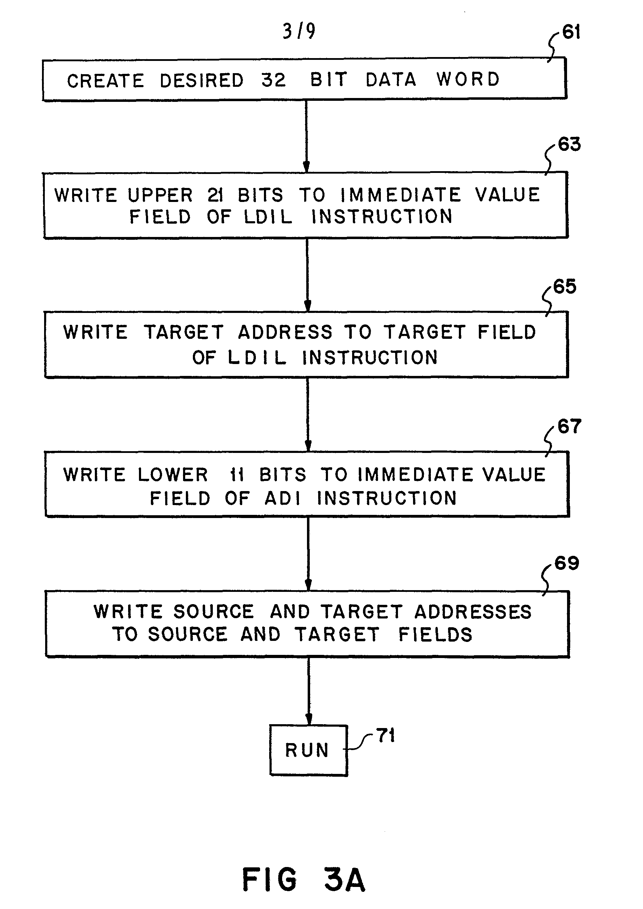

Figure 3A is a flow chart of the steps performed in preparing the LDIL and ADI instructions for use in accordance with the present invention. In step 61, the desired 32 bit data word that is to be loaded into the target register 17 is created. The 32 bit data word may be divided into an upper 21 bit part i' and a lower 11 bit part i" with the result that the 32 bit data word is defined as

0206655

(i' x $2^{11}$) + i". In step 63, the upper 21 bits i' of the word are written to the 21 bit immediate value field 37 of the LDIL instruction 31. In step 65, the 5 bit target address t of the target register 17 is written to the target field 35 of the LDIL instruction 31. In steps 67 and 69, the lower 11 bits i" of the desired data word are written to the 11 bit immediate value field 49 of ADI instruction 41 and the source and target addresses are written to fields 45 and 47.

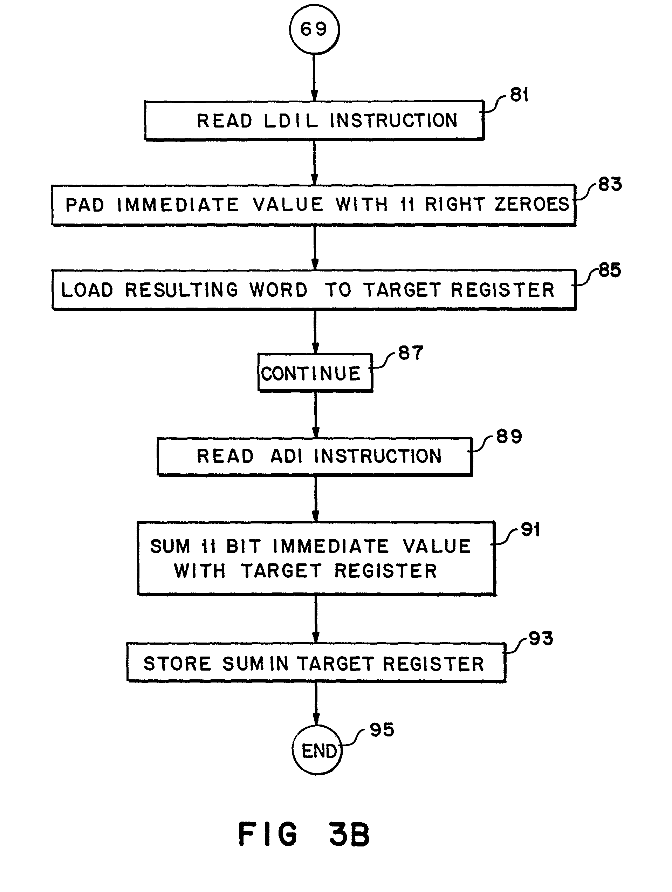

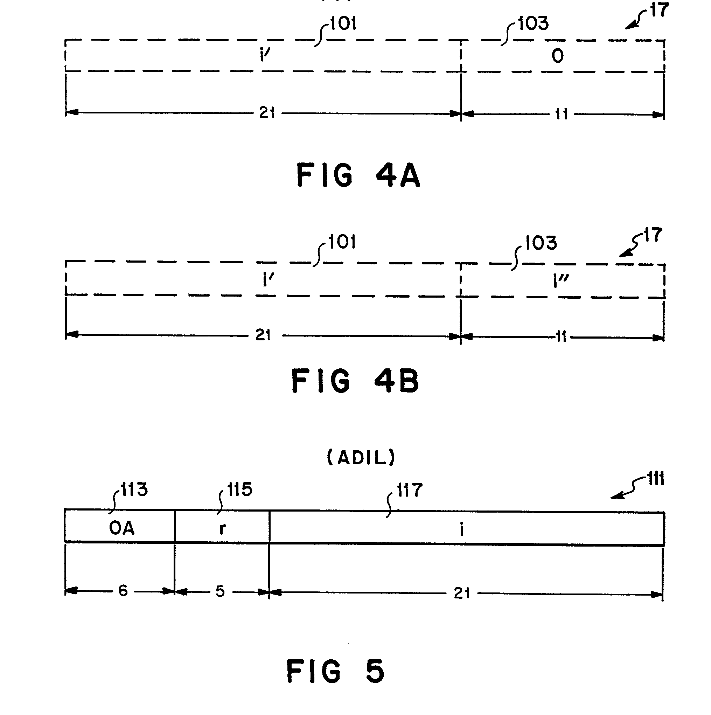

Figure 3B is a flow chart of the steps performed during the execution of the instructions LDIL 31 and ADI 41. In step 81 the instruction LDIL 31 is read and in step 83 the immediate value i' is padded on the right with 11 zeroes to create a 32 bit left adjusted word. In step 85 this resulting word is loaded to the target register 17 as shown in Figure 4A. At this point the LDIL instruction 31 has been completely executed independently of the subsequent execution of the ADI instruction 41. Thus, any page fault or interrupt occuring at step 87 may be handled in a normal fashion since only the register contents need be stored. No special status information, such as the definition of a subsequent instruction as data, need be stored as is the case in the prior art.

In step 89 the ADI instruction 41 is read and in step 91 the 11 bit immediate value i" is summed with the contents of the target register 17 and the sum is stored in target register 17. The result is that the desired data word (i' x

6

$2^{11}$) + i" is stored in the target register 17.

Figure 5 depicts bit assignments within the 32 bit ADD IMMEDIATE LEFT (ADIL) instruction 111.  The ADIL instruction may be used to sum 21 left adjusted bits with the contents of a 32 bit source register and with an 11 bit memory reference instruction displacement to create a full 32 bit address displacement.  This 32 bit displacement may then be used as an offset from a 32 bit base address stored in a base register.

The upper 6 bits of the ADIL instruction make up an opcode field 113 which identifies the instruction.  A source field 115 contains the 5 bit address of a source register shown as general register 21 in Figure 1.  The lower 21 bits of the ADIL instruction 111 make up the immediate value field 117 containing the immediate value i which is to be summed with the contents of the source register 21.

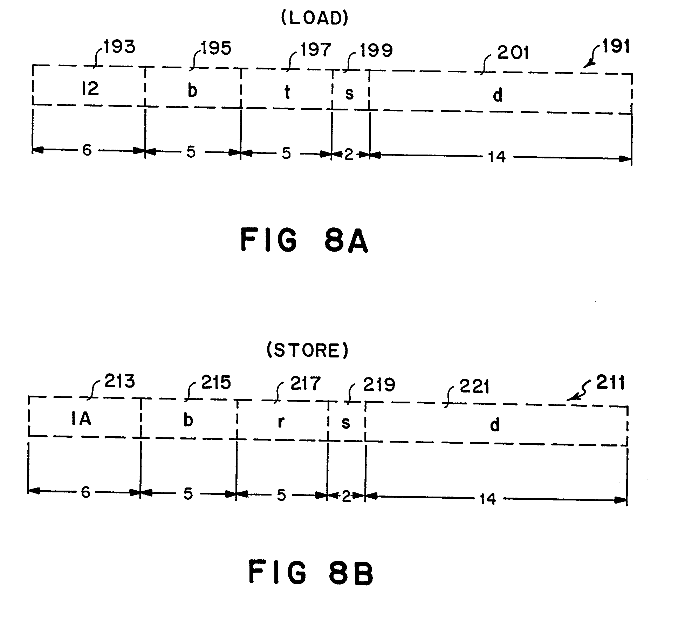

Figures 8A-8B shows two 32 bit memory reference instructions, LOAD instruction 191 and STORE instruction 211.  Both instructions include opcode fields 193, 213. Both instructions also include base fields 195, 215 which specify the address of a base register containing a base address which is the starting point for any address displacement.  Target field 197 specifies a target register and source field 217 specifies a source register.  Space fields 199, 219 specify a specific address space. Displacement fields 201, 221 contain a 14 bit displacement which is to be summed with the contents of the reserved register 19.

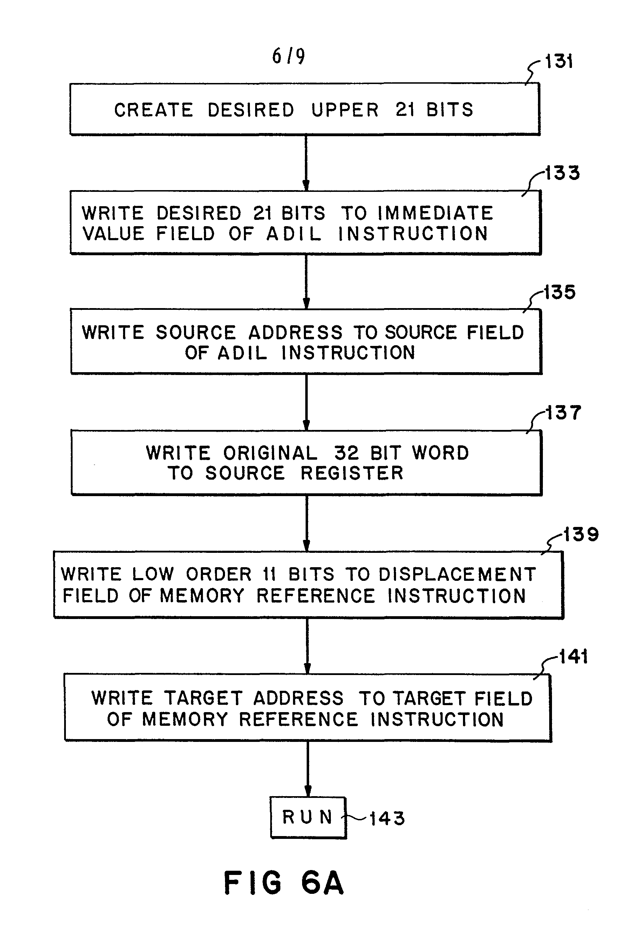

Figure 6A is a flow chart of the steps performed in preparing the ADIL and LOAD instructions for use in accordance with the alternate preferred embodiment of the present invention. In step 131 the desired upper 21 bits to be summed with the contents of source register 21 are created. These upper 21 bits may specify, e.g., part or all of a particular address displacement for later use or a modification of data resident in source register 21. In step 133 the 21 bits are written to the immediate value field 117 and the source address r of the source register 21 is written to source field 115. In step 137, the original 32 bit word is stored in source register 21 for addition with the 21 bits. Since the opcode indicates that the result is to be stored in the reserved register 19, no address for register 19 need be stated explicitly in the instruction. In step 139, the target address is written to the target field 197 and in step 141 the low order 11 bits are written to the displacement field 201. Since the displacement field 201 contains 14 bits, the 11 bit value is padded on the left with three zero bits. truncation will occur if more than 11 bits are placed therein.

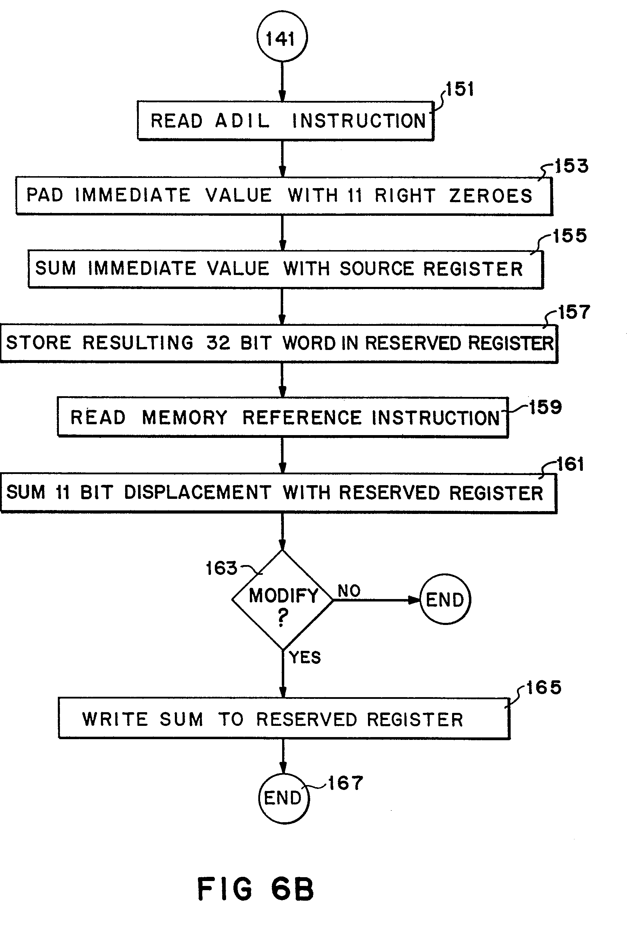

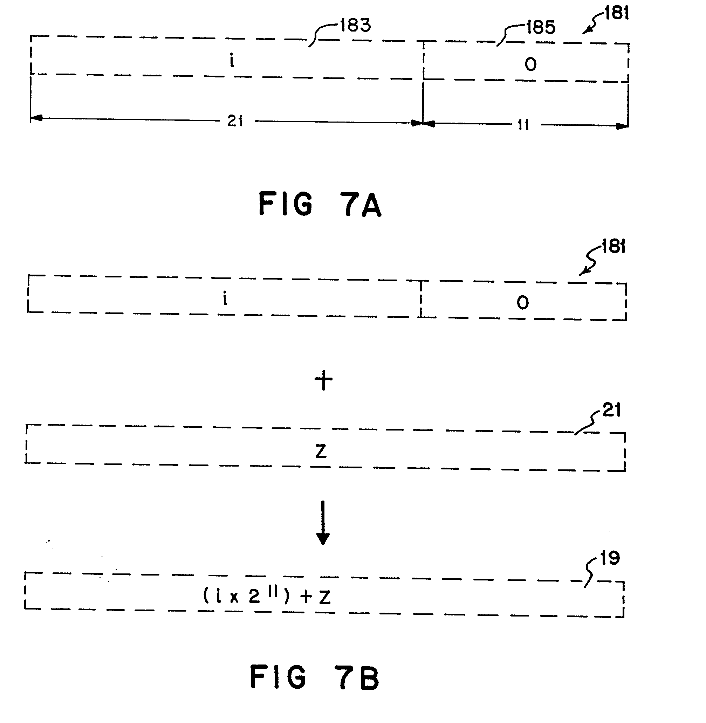

Figure 6B is a flow chart of the steps performed during the execution of the ADIL instruction 111 and the LOAD instruction 191. In step 151 the instruction 111 is read and in step 153 the immediate value i is padded on the right with 11 zeroes as shown in Figure 7A. In steps 155, 157 the padded immediate value is summed with the contents z of source register 21 and the result is stored in reserved register 19 as shown in Figure 7B. The resulting contents of reserved register 19 may be defined as $(i \times 2^{11}) + z$.

In step 159, the LOAD instruction 191 is read and in step 161 11 bits of the displacement field 201 are summed with the contents of reserved register 19 which is specified as the base register by field 195. If the opcode field 193 indicates that the contents of the reserved register 19 are to be modified, then in step 165 the sum is written back to the base register, that is, to the reserved register 19. The base field 195 specifies the reserved register which serves as the base address for the LOAD instruction.

Claims

We claim:

1. A method for embedding a data word in a stream of instructions, comprising the steps of:

generating a first instruction having an opcode field, a target field and an immediate value field;

writing the address of a target register to the target field;

writing an upper portion of the data word to the immediate value field;

generating a second instruction having an opcode field, a target field and an immediate value field;

writing the address of the target register to the target field of the second instruction;

writing a lower portion of the data word to the immediate value field of the second instruction;

reading the first instruction from the stream of instructions;

extracting the upper portion from the first instruction and padding the upper portion with a number of right values;

loading the padded upper portion to the target register;

reading the second instruction from the stream of instructions; and

combining the lower portion with the contents of the target register.

2. A method as in claim 1, wherein:

the upper portion is composed of the highest order bits of the data word; and

the number of bits of the upper and lower portions is greater than or equal to the number of bits in the data word.

3. A method as in claim 2, wherein the number of values is less than or equal to the number of bits in the lower portion.

4. A method as in claim 3, wherein the length of the data word is equal to the lengths of each of the first and second instructions.

5. A method as in claim 4, wherein:

the first and second instructions are each 32 bits long;

the upper portion is 21 bits long; and

the lower portion is 11 bits long.

6. A method as in claim 6, further comprising the final step of storing the combination of the lower portion and the contents of the target register in the target register.

7. A method for combining a data word embedded in a stream of instructions with the contents of a target register, comprising the steps of:

generating an instruction having an opcode field, a target field and an immediate value field;

writing the address of the target register to the target field;

writing an upper portion of the data word to the immediate value field;

reading the instruction from the stream of instructions;

extracting the upper portion from the instruction and padding the upper portion with a number of zeroes; and

combining the padded upper portion with the contents of the target register to form a resulting word.

8. A method as in claim 7, further comprising the step of storing the resulting word in a predetermined reserved register.

9. A method as in claim 8, further comprising the step of combining an immediate value field of a subsequent instruction with the contents of the reserved register.

10. A method as in claim 9, further comprising the step of storing the combination in the reserved register.

11. A method as in claim 8, wherein:

the upper portion is composed of the highest order bits of the data word; and

the number of bits of the upper portion plus the number of values is equal to the number of bits in the data word.

12. A method as in claim 9, wherein the length of the data word is equal to the length of the instruction.

13. A method as in claim 10, wherein:

each combination is a summation;

the values are each zeroes;

the instruction is 32 bits long;

12

the data word is 32 bits long;

the upper portion is 21 bits long; and

the number of zeroes is 11.

14. A computer when programmed to operate in accordance with the method as claimed in any of claims 1 to 3.

0206655

FIG 1

(LDIL)

| 08 | t | i' |
|----|---|-----|
| 6 | 5 | 21 |

FIG 2A

(ADI)

| 04 | r | t | c | o | i" |
|----|---|---|---|---|-----|
| 6 | 5 | 5 | 4 | 1 | 11 |

FIG 2B

```
                                                    ⌐61
┌─────────────────────────────────────────────────────┐
│      CREATE  DESIRED  32  BIT  DATA  WORD             │
└─────────────────────────────────────────────────────┘
                          │
                          ▼                        ⌐63
┌─────────────────────────────────────────────────────┐
│   WRITE  UPPER  21  BITS  TO  IMMEDIATE  VALUE        │
│          FIELD  OF  LDIL  INSTRUCTION                 │
└─────────────────────────────────────────────────────┘
                          │
                          ▼                        ⌐65
┌─────────────────────────────────────────────────────┐
│    WRITE  TARGET  ADDRESS  TO  TARGET  FIELD          │
│             OF  LDIL  INSTRUCTION                     │
└─────────────────────────────────────────────────────┘
                          │
                          ▼                        ⌐67
┌─────────────────────────────────────────────────────┐
│   WRITE  LOWER  11  BITS  TO  IMMEDIATE  VALUE        │
│          FIELD  OF  ADI  INSTRUCTION                  │
└─────────────────────────────────────────────────────┘
                          │
                          ▼                        ⌐69
┌─────────────────────────────────────────────────────┐
│    WRITE  SOURCE  AND  TARGET  ADDRESSES             │
│       TO  SOURCE  AND  TARGET  FIELDS                │
└─────────────────────────────────────────────────────┘
                          │
                          ▼
                   ┌──────────┐  ⌐71
                   │   RUN    │
                   └──────────┘
```

FIG 3A

FIG 3B

5/9

FIG 4A

FIG 4B

(ADIL)

FIG 5

CREATE DESIRED UPPER 21 BITS    131

WRITE DESIRED 21 BITS TO IMMEDIATE VALUE FIELD OF ADIL INSTRUCTION    133

WRITE SOURCE ADDRESS TO SOURCE FIELD OF ADIL INSTRUCTION    135

WRITE ORIGINAL 32 BIT WORD TO SOURCE REGISTER    137

WRITE LOW ORDER 11 BITS TO DISPLACEMENT FIELD OF MEMORY REFERENCE INSTRUCTION    139

WRITE TARGET ADDRESS TO TARGET FIELD OF MEMORY REFERENCE INSTRUCTION    141

RUN    143

# FIG 6A

0206655

FIG 6B

181

183                          185

| i | 0 |

21                  11

## FIG 7A

181

| i | 0 |

$+$

21

| z |

$\downarrow$

19

| $(i \times 2^{11}) + z$ |

## FIG 7B

0206655

9/9

(LOAD)

FIG 8A

(STORE)

FIG 8B